(19) Europäisches Patentamt / European Patent Office / Office européen des brevets

(11) EP 2 452 968 A1

(12) EUROPÄISCHE PATENTANMELDUNG

(43) Veröffentlichungstag:
16.05.2012 Patentblatt 2012/20

(51) Int Cl.:
C08J 9/18 (2006.01)      C08J 9/12 (2006.01)
B29C 44/34 (2006.01)      C08L 25/04 (2006.01)

(21) Anmeldenummer: 10190893.7

(22) Anmeldetag: 11.11.2010

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR
Benannte Erstreckungsstaaten:
BA ME

(71) Anmelder: BASF SE
67056 Ludwigshafen (DE)

(72) Erfinder: Die Erfindernennung liegt noch nicht vor

(54) **Verfahren zur Herstellung von expandierbaren thermoplastischen Partikeln mit Verbesserter Expandierbarkeit**

(57)   Ein Verfahren zur Herstellung von Hohlräume enthaltenden, expandierbaren, thermoplastischen Polymerpartikeln durch Extrusion einer treibmittelhaltigen Polymerschmelze durch eine Düsenplatte und Granulierung in einer flüssigkeitsgefüllten Kammer unter einem Druck im Bereich von 1,5 bis 15 bar, wobei die treibmittelhaltige Polymerschmelze
0,1 bis 5 Gew.-% eines Nukleierungsmittels D),
1 bis 10 Gew.-% eines im Wesentlichen in den Polymerpartikeln verbleibenden Treibmittels E),
0,01 bis 5 Gew.-% eines die Hohlräume bildenden Co-Treibmittels F),

jeweils bezogen auf die treibmittelhaltige Polymerschmelze, enthält, sowie die nach dem Verfahren erhältlichen expandierbaren thermoplastischen Polymerpartikel mit Hohlräumen mit einem mittleren Durchmesser im Bereich von 0,1 bis 50 $\mu$m.

Fig. 1

100µm          Detektor = SE2          Hochsp. = 5.00 kV

**Beschreibung**

Die Erfindung betrifft ein Verfahren zur Herstellung von Hohlräume enthaltenden, expandierbaren, thermoplastischen Polymerpartikeln durch Extrusion einer treibmittelhaltigen Polymerschmelze durch eine Düsenplatte und Granulierung in einer flüssigkeitsgefüllten Kammer unter einem Druck im Bereich von 1,5 bis 15 bar.

Expandierbare Partikelschaumstoffe können im Suspensionsverfahren, durch Nachimprägnierung von Polymergranulaten oder im Schmelzeextrusionsverfahren hergestellt werden. Hinsichtlich möglicher Einsatzstoffe und Zuschlagsstoffe ist das Schmelzeextrusionsverfahren besonders vielseitig.

Verfahren zur Herstellung von expandierbaren Polymeren nach dem Schmelzeimprägnierverfahren sind bekannt. Die Anwendung für verschiedene Polymersysteme wurde mittlerweile für mehrere Materialien demonstriert, beispielsweise für acrynitrilhaltige Styrolcopolymere (WO 2009/000872) und für elastifizierte expandierbare Partikelschaumstoffe (WO 2009/112549).

Die Eigenschaften von Partikelschaumstoffen hängen stark von der Zellstruktur, z.B. Zellgröße oder Zellgrößenverteilung ab. Durch Beeinflussung der Zellgröße sind somit beispielsweise die thermischen, mechanischen, optischen und haptischen Eigenschaften veränderbar. Aufgrund der gegebenen prozesstechnischen Randbedingungen kann die Zellstruktur ohne eine Änderung der Materialzusammensetzung nur begrenzt gesteuert werden.

Daher werden zur Kontrolle der Zellgröße häufig Nukleierungsmittel, beispielsweise anorganische Additive und organische Nukleierungsmittel, wie Wachse, eingesetzt, die dem System Grenzfläche zur Verfügung stellen und damit die Energiebarriere für die heterogene Nukleierung an der Phasegrenzfläche zwischen Polymer und Nukleierungsmittel reduzieren.

Derartige Nukleierungsmittel eignen sich jedoch nur bedingt aufgrund ihrer teilweise geringen Effizienz und ihres negativen Einflusses auf die mechanischen Eigenschaften oder die Brandeigenschaften des Schaumstoffs. Beispielsweise kann durch den Zusatz von anorganischen, partikelförmigen Nukleierungsmitteln wie Talkum die Zähigkeit, z.B. charakterisiert durch die Biegearbeit oder die Rißbeständigkeit, reduziert werden. Um die Anbindung der anorganischen Nukleierungsmittel und damit die mechanischen Eigenschaften wieder zu verbessern, können zwar Phasenvermittler oder oberflächenmodifizierte Füllstoffe eingesetzt werden, die jedoch wiederum eine geringere Nukleierungseffizienz aufweisen.

Zudem sollten die organischen Nukleierungsmittel eine geringe Löslichkeit im zu nukleierenden Polymeren aufweisen, um eine Phasenseparation zu erlauben. Somit scheiden beispielsweise olefinische Wachse für die Verwendung in olefinischen Polymeren aus. Organische Nukleierungsmittel wie olefinische Wachse, z.B. Luwax®, eignen sich nicht für alle Materialien. Auch in zähmodifizierten Styrolschaumstoffen sind olefinische Nukleierungsmittel nicht einsetzbar, da sie im Material nicht phasenseparieren, sondern in die Polyolefinphasen migrieren. Damit ist keine effektive Nukleierung mehr erreichbar.

Eine Erhöhung der Zelldichte kann ebenfalls durch die Verwendung schlecht löslicher Treibmittel erzielt werden. Derartige Treibmittel erfordern jedoch sehr hohe Lösungsdrücke und zeigen eine lange Verweilzeit in den vorgeschäumten Partikeln oder ausgeschäumten Formteilen auf, d.h. sie weisen sowohl verfahrens- und anwendungsspezifische Nachteile auf.

Die Verwendung von organischen Treibmitteln und inerten Gasen zur Steuerung der Schaumstruktur und Schaumeigenschaften von expandierbaren Polymeren ist bisher nur im begrenzten Umfang beschrieben. Im Folgenden werden einige relevante Patentschriften zusammengefasst, die sowohl die Schaumstoffextrusion, expandierbare und expandierte Partikel umfassen.

Die Herstellung von Schaumstoffpartikel unter Verwendung von Wasser als Treibmittel ist in WO 2004/022636 beschrieben. Zur Verbesserung der Wasserverträglichkeit wird mit Löslichkeitsvermittlern wie Ethanol und Aceton gearbeitet. Zudem werden weitere Treibmittel wie Pentan, Butan und/oder $CO_2$ eingesetzt. Ziel der Zugabe von Wasser ist primär die Verringerung der organischen Treibmittel in den expandierbaren Granulaten, ein Einfluss auf die Zellgröße wird nicht beschrieben.

Die Herstellung und Anwendung von geringfügig angeschäumten, expandierbaren Styrolpolymerisaten ist in DE 198 190 58 beschrieben. Durch Variation der Prozessparameter können in bei der Suspensionspolymerisation und bei der Schmelzeimprägnierung unter Verwendung von Pentan als Treibmittel auf Schüttdichten angeschäumt, die 0,1 bis 20 % unter der Schüttdichte der nicht angeschäumten Materialien liegen. Durch das Anschäumen sollen grobzelligere Schaumstoffe hergestellt werden können. Die Erzielung einer homogenen Anschäumung des Materials hängt aber sehr stark von den gewählten Prozessbedingungen ab und kann nicht beliebig variiert werden.

Die Verwendung von mehreren Treibmitteln in mehrphasigen Polymersystemen ist in WO 2005/092959 beschrieben. Ziel ist dabei die Herstellung nanoporöser Schaumstoffe durch selektive Imprägnierung einer nanoskaligen Struktur mit einem Treibmittel und das anschließende Aufschäumen. Zwingende Voraussetzung für die Erzielung der feinzelligen Struktur ist dabei eine mehrphasige Blendstruktur.

Die Verwendung von Treibmittelkombinationen wird beispielsweise in EP-A 846 141 beschrieben. Bei der kontinuierlichen Verfahrensführung zu Herstellung von expandierbaren Styrolpolymerisaten werden $C_3$ - $C_7$- Kohlen-

wasserstoffe einzeln oder im Gemisch mit $CO_2$ als Treibmittel zugegeben. Der Prozess umfasst die Massenpolymerisation des Styrolpolymerisats bis zu einem gewissen Umsatz, das Dispergieren des erhaltenen Vorpolymerisats in flüssiger Form in wässriger Phase mit Suspensionsstabilisator und das anschließende Auspolymerisieren. Die Treibmittel können bei jedem der Verfahrensschritte zugegeben werden. Bei Verwendung von $CO_2$ werden zudem vorteilhaft $CO_2$ - Absorber eingesetzt. Eine spezielle Funktion des $CO_2$ während oder nach dem Herstellprozess wird nicht beschrieben.

Die Vorexpansion von vinylaromatischen Polymeren zu einer Schüttdichte von 200 - 600 g/l und die anschließende Nachexpansion des Materials nach Imprägnierung mit anorganischen Gasen, speziell mit $O_2$ - bzw. $N_2$-haltigen Gasen, ist in EP-A 987 292 beschrieben. Die Schritte der Vorexpansion und der Nachimprägnierung finden dabei zeitlich getrennt statt. Der Nachimprägnierschritt ist für die Expansion in allen Fällen erforderlich.

Ein Verfahren zur Herstellung von expandierbaren Polymergranulaten, speziell auf Basis von Polystyrol, ist in EP-B 1 000 115 beschrieben. Nach der Imprägnierung der Polymeren mit geeigneten Treibmitteln findet eine Zerstäubung und anschließende Abkühlung der erhaltenen Granulate statt. Als mögliche Treibmittel werden unter anderem Kohlenwasserstoffe, Chlorfluorkohlenwasserstoffe, $CO_2$ $N_2$ und Luft bzw. Edelgase genannt. Bei Verwendung von $CO_2$, $N_2$ und Luft werden keine besonderen Effekte beschrieben.

Die Verwendung von geringen Anteilen von $CO_2$ zusätzlich zu aliphatischen Kohlenwasserstoffen wird in US 2,864,778 zur Herstellung von expandierbaren Styrolpolymeren beschrieben. Durch die Zugabe von $CO_2$ vor bzw. während der Polymerisation im Suspensionsprozess können feinzelligere Schaumstoffe produziert werden. Der dafür notwendige Anteil ist als sehr klein beschrieben. Effekte treten gemäß den Beispielen bereits bei 0.4 Gew.-% und geringeren Anteilen auf. Weitere Systeme zur Erzielung feinzelliger Produkte werden ebenso wie andere Prozesse zur Herstellung expandierbarer Styrolpolymerisate nicht beschrieben.

Die Verwendung von Gasen, speziell von $N_2$ und Luft, zur Herstellung von Schaumstoffen aus expandierbaren Styrolpolymeren und Interpolymeren wird in US 3.328.497 beschrieben. Das beschriebene Verfahren umfasst die teilweise Expansion des expandierbaren Polymeren, das ein organisches Treibmittel mit einen Siedepunkt von unter 80 °C beinhaltet, und den raschen Transfer in eine Atmosphäre mit erhöhten Gasdruck und geringer Temperatur. Der Schaumstoff wird in einem letzten Schritt durch die weitere Expansion in einer geschlossenen Form bei erhöhten Temperaturen erhalten. Die Beladung des Granulats mit den beschriebenen Gasen wird analog zu EP 987 292 nach der Vorexpansion der Materialien durchgeführt, besondere Effekte auf die Zelligkeit werden nicht beschrieben.

Für die Herstellung von Schaumstoffpartikeln aus ethylenbasierten Harzen wird in US 5,391,581 die Verwendung von Treibmittelmischungen aus aliphatischen Kohlenwasserstoffen bzw. alizyklischen Kohlenwasserstoffen und $CO_2$ beschrieben. Durch die Verwendung von $CO_2$ und zusätzlich eingebrachter, anorganischer Nukleierungsmittel kann die Zellgröße der expandierten Granulate homogen eingestellt werden, jedoch ist eine zusätzlich Expansion vor der Formteilherstellung im Gegensatz zu expandierbaren Partikeln nicht möglich.

Die Extrusion von Schaumstoffplatten (XPS) styrolbasierter Polymersysteme unter Verwendung mehrere Treibmittel ist in US 2006/0022366 beschrieben. In Kombination mit iso-Butan, n-Pentan, iso-Pentan oder Mischungen daraus werden vorteilhaft Wasser, $CO_2$, Ether oder Dialkylcarbonate mit einem Siedepunkt unter 140 °C als Treibmittel verwendet. Durch die Verwendung der genannten Treibmittel und der im Vergleich zu Luft rascheren Permeation nach dem Schäumen entsteht ein Unterdruck, der für weitere Formgebungsprozesse vorteilhaft ist.

In US 2007/0049649 ist eine Verfahren zur Herstellung von geschäumten, Mikrohohlräume enthaltenden Polymerpartikeln beschrieben, bei das Polymer mit einem Gas unter hohem Druck oder einer Flüssigkeit im überkritischen Zustand in einem Extruder zu einer homogenen einphasigen Mischung verarbeitet und extrudiert wird.

Die EP-A 0 761 729 beschreibt expandierbare Styrolharzpartikel mit weniger als 100 Mikrohohlräumen von etwa 0,1 bis 30 μm Durchmesser, die durch Suspensionspolymerisation in Gegenwart eines Persulfates und eines Elektrolyten erhalten werden.

Aufgabe der vorliegenden Erfindung war es, ein Verfahren zur Herstellung expandierbaren thermoplastischen Polymerpartikeln mit verbesserter Expandierbarkeit zu finden, welche bei verringerter Treibmittelgehalten dennoch ein schnelleres Vorschäumen und eine kontrollierte Einstellung der Zellstruktur ermöglichen.

Demgemäß wurde ein Verfahren zur Herstellung von Hohlräumen enthaltenden, expandierbaren, thermoplastischen Polymerpartikeln durch Extrusion einer treibmittelhaltigen Polymerschmelze durch eine Düsenplatte und Granulierung in einer flüssigkeitsgefüllten Kammer unter einem Druck im Bereich von 1,5 bis 15 bar, gefunden, wobei die treibmittelhaltige Polymerschmelze

0,1 bis 5 Gew.-%, bevorzugt 0,3 bis 1,0 Gew.-% eines Nukleierungsmittels D),

1 bis 10 Gew.-%, bevorzugt 2 bis 6 Gew.-% eines im Wesentlichen in den Polymerpartikeln verbleibenden Treibmittels E),

0,01 bis 5 Gew.-%, bevorzugt 0,05 bis 1 Gew.-% eines die Hohlräume bildenden Co-Treibmittels F),

jeweils bezogen auf die treibmittelhaltige Polymerschmelze, enthält.

Überraschenderweise wurde gefunden, dass durch die Verwendung von flüchtigen, flüssigen / gasförmigen Hohlräume bildende Co-Treibmittel F) eine zelluläre Struktur in den expandierbaren Granulaten eingestellt werden kann, mit deren Hilfe der spätere Schäumvorgang verbessert und die Zellgröße kontrolliert werden kann.

Als Nukleierungsmittel D)eignen sich anorganische oder organische Nukleierungsmittel. Als anorganische Nukleierungsmittel eignen sich beispielsweise Talkum, Siliziumdioxid, Mika, Ton, Zeolithe oder Calciumcarbonat. Als organische Nukleierungsmittel eignen sich beispielsweise Wachse, wie die unter der Bezeichnung Luwax® vertriebenen Polyethylenwachse. Bevorzugt wird Talkum eingesetzt.

Als Treibmittel (Komponente E) werden 1 bis 10 Gewichtsprozent, bevorzugt 3 bis 8 Gewichtsprozent, bezogen auf die Summe aller Komponenten A) bis F) der treibmittelhaltigen Polymerschmelze, eines physikalischen Treibmittels eingesetzt. Die Treibmittel können bei Raumtemperatur (20 bis 30˚C) und Normaldruck gasförmig oder flüssig sein. Sie sollten einen Siedepunkt unterhalb der Erweichungstemperatur der Polymermischung, üblicherweise im Bereich von -40 bis 80˚C, bevorzugt im Bereich von -10 bis 40˚C. Geeignete Treibmittel sind beispielsweise halogenierte oder halogenfreie, wie aliphatischen $C_3$ bis $C_8$-Kohlenwasserstoffen, Alkoholen, Ketonen oder Ethern. Als aliphatische Treibmittel eignen sich beispielsweise aliphatische $C_3$ bis $C_8$-Kohlenwasserstoffe, wie n-Propan, n-Butan, iso-Butan, n-Pentan, iso-Pentan, n-Hexan, Neopentan, cycloaliphatische Kohlenwasserstoffe, wie Cyclobutan und Ccylopentan, halogenierte Kohlenwaserstoffe, wie Methylchlorid, Ethylchlorid, Methylenchlorid, Trichlorofluormethan, Dich-Iorfluormethan, Dichlordifluormethan, Chlordiflourmethan, Dichlortetrafluorethan und Mischungen davon. Bevorzugt werden die halogenfreien Treibmittel iso-Butan, n-Butan, iso-Pentan, n-Pentan, Neopentan, Cyclopentan und Mischungen davon.

Das Treibmittelhaltevermögen nach Lagerung kann verbessert und geringere minimale Schüttdichten erreicht werden, wenn das Treibmittel bevorzugt einen Anteil von 25 bis 100 Gewichtsprozent, besonders bevorzugt 35 bis 95 Gewichtsprozent, bezogen auf das Treibmittel, iso-Pentan oder Cyclopentan enthält. Besonders bevorzugt werden Mischungen aus 30 bis 98 Gew.-%, insbesondere 35 bis 95 Gew.-% Iso-Pentan und 70 bis 2 Gew.-%, insbesondere 65 bis 5 Gew.-% n-Pentan eingesetzt.

Als Treibmittel E) werden bevorzugt aliphatische $C_3$ - $C_7$-Kohlenwasserstoffe oder Mischungen davon, besonders bevorzugt iso-Butan, iso-Pentan, n-Pentan und Mischungen daraus eingesetzt. Bevorzugt enthält die treibmittelhaltige Polymerschmelze weniger als 0,5 Gew.-% Wasser.

Der Verfahren zur Einstellung dieser Hohlraum-Morphologie kann auch als Vornukleierung bezeichnet werden, wobei die Hohlräume im wesentlichen durch das Co-Treibmittel F) gebildet werden.

Das die Hohlräume bildende Co-Treibmittel F) unterscheidet sich vom eigentlichen Treibmittel E in dessen Löslichkeit im Polymeren. Bei der Herstellung werden zunächst Treibmittel E) und Co-Treibmittel F) im Polymeren bei ausreichend hohem Druck vollständig gelöst. Anschließend wird der Druck reduziert, vorzugsweise innerhalb kurzer Zeit, und somit die Löslichkeit des Co-Treibmittel F) reduziert. Dadurch stellt sich eine Phasenseparation in der polymeren Matrix ein und eine vornukleierter Struktur entsteht. Das eigentliche Treibmittel E) bleibt aufgrund dessen höherer Löslichkeit und / oder dessen geringer Diffusionsgeschwindigkeit überwiegend im Polymeren gelöst. Simultan zur Druckreduzierung wird vorzugsweise eine Temperaturreduktion durchgeführt, um eine zu starke Nukleierung des Systems zu verhindern und ein Ausdiffundieren des eigentlichen Treibmittels E) zu verringern. Erreicht wird dies durch Co-Treibmittel F) in Verbindung mit optimalen Granulierbedingungen.

Bevorzugt entweicht das Co-Treibmittel F) zu mindestens 80 Gew.-% innerhalb von 24 h aus den expandierbaren thermoplastischen Partikeln bei einer Lagerung bei 25˚C, Normaldruck und 50% relativer Feuchtigkeit. Die Löslichkeit des Co-Treibmittels F) in den expandierbaren thermoplastischen Partikeln liegt bevorzugt unter 0,1 Gew.-%

Bevorzugt werden Co-Treibmittel F) eingesetzt, die zudem eine höhere Diffusionsgeschwindigkeit und / oder eine erhöhte Permeabilität und / oder einen erhöhten Dampfdruck als das eigentliche Treibmittel E) aufweisen; besonders bevorzugt weisen die Co-Treibmittel F) mehrere der Charakteristika auf. Um den Nukleierungsprozess zusätzlich zu unterstützen, können kleine Mengen üblicher Nukleierungsmittel, beispielsweise anorganische Partikel wie Talkum eingesetzt werden.

In allen Fällen sollte die zugegebene Menge des eingesetzten Co-Treibmittels F) bei der Vornukleierung die maximale Löslichkeit bei den vorliegenden Prozessbedingungen überschreiten. Daher werden bevorzugt Co-Treibmittel F) eingesetzt, die eine geringe, aber ausreichende Löslichkeit im Polymeren aufweisen. Dazu zählen insbesondere Gase wie Stickstoff, Kohlendioxid, Luft oder Edelgase, besonders bevorzugt Stickstoff, dessen Löslichkeit in vielen Polymeren sich bei niedrigen Temperaturen und Drücken verringert. Es sind aber auch andere flüssige Additive vorstellbar.

Besonders bevorzugt werden inerte Gase wie Stickstoff und Kohlendioxid eingesetzt. Beide Gase zeichnen sich neben ihren geeigneten physikalischen Eigenschaften durch geringe Kosten, gute Verfügbarkeit, einfache Handhabbarkeit und reaktionsträges bzw. inertes Verhaltes aus. Beispielsweise findet in Gegenwart der beiden Gase in nahezu allen Fällen keine Degradation des Polymeren statt. Da die Gase selbst aus der Atmosphäre gewonnen werden, besitzen sie zudem ein umweltneutrales Verhalten.

Die eingesetzte Menge des Co-Treibmittel F) sollte dabei: (i) hinreichend klein sein, um sich bei den gegebenen Schmelzetemperaturen und -drücken bei der Schmelzeimprägnierung bis zur Granulierung zu lösen; (ii) ausreichend hoch sein, um sich beim Granulierwasserdruck und der Granuliertemperatur aus dem Polymer zu entmischen und nukleieren. In einer bevorzugten Ausführungsform ist mindestens eines der verwendeten Treibmittel bei Raumtemperatur und unter Normaldruck gasförmig.

Bevorzugt wird zudem ein Co-Treibmittel F) eingesetzt, das nach dem Vornukleierung aus dem expandierbaren Granulat innerhalb kurzer Zeit vollständig entweicht und somit den weiteren Schäumprozess nicht beeinflusst. Als Co-Treibmittel F) werden besonders bevorzugt Stickstoff, Kohlendioxid, Argon, Helium oder Mischungen davon, eingesetzt.

Besonders bevorzugt wird Talk als Nukleierungsmittel D) in Kombination mit Stickstoff als Co-Treibmittel F) eingesetzt.

Für den Transport und die Lagerung der expandierbaren Granulate kommen unter anderem Metallfässer und Oktabins zum Einsatz. Beim Einsatz von Fässern ist zu beachten, dass sich durch die Freisetzung der Co-Treibmittel F) ggf. Druck im Fass aufbauen kann. Als Packmittel sind daher vorzugsweise offene Gebinde wie Oktabins oder Fässer zu verwenden, die einen Druckabbau durch Permeation des Gases aus dem Fass ermöglichen. Besonders bevorzugt sind dabei Fässer, die ein Ausdiffundieren des Co-Treibmittels F) ermöglichen und eine Ausdiffundieren des eigentlichen Treibmittels E) minimieren bzw. verhindern. Dies kann beispielsweise durch die Abstimmung des Dichtungswerkstoffs auf das Treibmittel bzw. Co-Treibmittel F) ermöglicht werden. Vorzugsweise ist die Permeabilität des Dichtungsmaterials für das Co-Treibmittel F) um mindestens einen Faktor 20 höher als die Permeabilität des Dichtungsmaterials für das Treibmittel E)

Durch die Vornukleierung, beispielsweise durch Zugabe geringer Mengen an Stickstoff und Kohlendioxid, kann im expandierbaren, treibmittelhaltigen Granulat eine zelluläre Morphologie eingestellt werden. Die mittlere Zellgröße im Zentrum der Partikel ist kann dabei größer als in den Randbereichen, die Dichte ist in den Randbereichen der Partikel höher sein. Dadurch werden Treibmittelverluste soweit wie möglich minimiert.

Durch die Vornukleierung ist eine deutliche bessere Zellgrößenverteilung und einer Reduzierung der Zellgröße nach dem Vorschäumen erzielbar. Zudem ist die benötigte Menge an Treibmittel zum Erreichen einer minimalen Schüttdichte geringer und die Lagerstabilität des Materials verbessert. Geringe Mengen Stickstoff oder Kohlendioxid bei Zugabe in die Schmelze können zu einer deutlichen Verkürzung der Vorschäumzeiten bei konstantem Treibmittelgehalt bzw. zu einer deutlichen Reduzierung der Treibmittelmengen bei gleichbleibenden Schäumzeiten und minimalen Schaumdichten führen. Zudem werden durch die Vornukleierung die Produkthomogenität und die Prozessstabilität verbessert.

Eine erneute Imprägnierung der erfindungsgemäßen Polymergranulate mit Treibmitteln ist des Weiteren deutlich schneller möglich als bei Granulaten mit identischer Zusammensetzung und kompakter, d. h. nichtzellulärer Struktur. Einerseits sind die Diffusionszeiten geringer, andererseits benötigt man analog zu direkt imprägnierten Systemen geringere Treibmittelmengen für das Schäumen.

Schließlich kann durch die Vornukleierung der Treibmittelgehalt, der zur Erzielung einer gewissen Dichte erforderlich ist, reduziert und damit die Entformzeiten bei der Formteil- bzw. Blockherstellung verringert werden. Somit können die Weiterverarbeitungskosten reduziert und die Produktqualität verbessert werden.

Die Vornukleierung kann generell auf alle expandierbaren Partikel angewendet werden. Bevorzugt ist die Anwendung auf Materialien mit hohen Anforderungen an die mechanischen Eigenschaften und auf Systeme, bei denen standardmäßig verwendete Nukleierungsmittel nur geringe Effekte zeige. Beispielsweise konnte bei elastifizierten Schaumstoffen die Feinzelligkeit durch Zugabe von Stickstoff bzw. Kohlendioxid deutlich verbessert werden.

Das Prinzip der Vornukleierung kann sowohl für die Suspension-Technologie als auch für die Schmelzeimprägnierungstechnologie zur Herstellung von expandierbaren Partikel genutzt werden. Bevorzugt wird die Anwendung im Schmelzeextrusionsverfahren, bei dem die Zugabe der Co-Treibmittel F) durch die druckunterstützte Unterwassergranulierung nach Austritt der treibmittelbeladenen Schmelze granuliert wird. Durch Wahl der Granulierparameter und des Co-Treibmittel F) kann die Mikrostruktur des Granulats wie oben beschrieben gesteuert werden.

Die Einmischung der Treibmittel E) und Co-Treibmittel F) in die Polymerschmelze kann über dynamischeMischer, beispielsweise Extruder oder statische Mischer erfolgen.

Bei höheren Mengen an Co-Treibmittel F), beispielsweise im Bereich von 1 bis 10 Gew.-% bezogen auf die treibmittelhaltige Polymerschmelze, ist eine Erniedrigung der Schmelzetempratur oder der Schmelzeviskosität und damit eine deutliche Durchsatzerhöhung möglich. Damit ist auch eine schonende Einarbeitung thermolabiler Zusatzstoffe, beispielsweise Flammschutzmittel, zur Polymerschmelze möglich. Die Zusammensetzung der expandierbaren thermoplastischen Partikel wird dadurch nicht verändert, da das Co-Treibmittel bei der Schmelzeextrusion im Wesentlichen entweicht. Zur Ausnutzung dieses Effektes wird bevorzugt $CO_2$ eingesetzt. Bei $N_2$ sind die Effekte auf die Viskosität geringer. Stickstoff wird daher vorwiegend zur Einstellung der gewünschten Zellstruktur eingesetzt.

Die flüssigkeitsgefüllte Kammer zur Granulierung der expandierbaren thermoplastischen Polymerpartikel wird bevorzugt bei einer Temperatur im Bereich von 20 bis 80°C, besonders bevorzugt im Bereich von 30 bis 60°C betrieben.

Als thermoplastisches Polymer können z. B. Styrolpolymere, Polyamid (PA), Polyolefine, wie Polypropylen (PP) oder Polyethylen (PE), Polyacrylate, wie Polymethylmethacrylat (PMMA), Polycarbonat (PC), Polyester, wie Polyethylentherephtalat (PET) oder Polybutylenterephthalat (PBT), Polyethersulfon (PES), Polyetherketonen (PEK) oder Polyethersulfiden (PES) oder Mischungen davon eingesetzt werden.

Bevorzugt werdenStyrolcopolymere, wie Styrol-Butadien-Blockcopolymere, Styrol-α-Methylstyrol-copolymer, Acrylnitril-Butadien-Styrol (ABS), Styrol-Acrylnitril (SAN), Acrylnitril-Styrol-Acrylester (ASA), Methyacrylat-Butadien-Styrol (MBS), Methylmethacrylat-Acrylnitril-Butadien-Styrol (MABS)- polymerisate, radikalisch polymerisiertes glasklares Polystyrol (GPPS), schlagzäh-modifiziertes Polystyrol (HIPS) oder anionisch polymerisisertes Polystyrol (A-PS) oder anionisch polymerisiertes Schlagzäh-Polystyrol (A-IPS) eingesetzt.

Die Zusammensetzung der Polymergranulate kann entsprechend den gewünschten Eigenschaften des Partikelschaumformkörpers gewählt werden. Styrol-Butadien-Blockcopolymere als Styrolcopolymerkomponente eignen sich insbesondere um die Elastizität und das Rückstellvermögen des Partikelschaumformkörpers zu verbessern. Mit Acrylnitril-haltigen Styrolcopolymeren, wie SAN und ABS kann die Ölbeständigkeit sowie die Lösungsmittelbeständigkeit, insbesondere gegenüber aromatischen Lösungsmitteln und die Wärmeformbeständigkeit verbessert werden.

Besonders bevorzugt wird in dem erfindungsgemäßen Verfahren eine treibmittelhaltige Polymerschmelze eingesetzt, welche

> A) 45 bis 97,79 Gewichtsprozent eines Styrolpolymeren,
> B1) 1 bis 45 Gewichtsprozent eines Polyolefins mit einem Schmelzpunkt im Bereich von 105 bis 140˚C,
> B2) 0 bis 25 Gewichtsprozent eines Polyolefins mit einem Schmelzpunkt unter 105˚C,
> C1) 0,1 bis 25 Gewichtsprozent eines Styrol-Butadien- oder Styrol-Isopren-Blockcopolymeren,
> C2) 0 bis 10 Gewichtsprozent eines Styrol-Ethylen-Butylen-Blockcopolymeren,
> D) 0,1 bis 5 Gew.-% eines Nukleierungsmittels,
> E) 1 bis 10 Gew.-% eines im Wesentlichen in den Polymerpartikeln verbleibenden Treibmittels,
> F) 0,01 bis 5 Gew.-% eines die Hohlräume bildenden Co-Treibmittels,

jeweils bezogen auf die treibmittelhaltige Polymerschmelze, enthält.

Komponente A

Die Polymerpartikel enthalten 45 bis 97,8 Gew.-%, besonders bevorzugt 55 bis 78,1 Gew.-% eines Styrolpolymeren A), wie Standard (GPPS)- oder Schlagzähpolystyrol (HIPS) oder Styrol-Acrylnitril-Copolymere (SAN) oder Acrylnitril-Butadien-Styrol-Copolymere (ABS) oder Mischungen davon. Die zur Herstellung der Schaumstoffpartikel P1 eingesetzten expandierbaren, thermoplastischen Polymerpartikel enthalten als Styrolpolymer A) bevorzugt Standard-Polystyrol (GPPS). Besonders bevorzugt werden Standard-Polystyroltypen mit gewichtsmittleren Molekulargewichten im Bereich von 120.000 bis 300.000 g/mol, insbesondere 190.000 bis 280.000 g/mol, ermittelt mit Gelpermeationschromatographie; und einer Schmelzevolumenrate MVR (200˚C/5 kg) nach ISO 113 im Bereich von 1 bis 10 cm$^3$/10 min, beispielsweise PS 158 K, 168 N oder 148 G der BASF SE. Zur Verbesserung der Verschweißung der Schaumstoffpartikel bei der Verarbeitung zum Formteil können leichtfließende Typen, beispielsweise Empera® 156L (Innovene) zugesetzt werden

Komponenten B

Als Komponenten B) enthalten die thermoplastischen Polymerpartikel Polyolefine B1) mit einem Schmelzpunkt im Bereich von 105 bis 140˚C und Polyolefine B2) mit einem Schmelzpunkt unter 105˚C. Der Schmelzpunkt ist der mittels DSC (Dynamical Scanning Calorimetrie) bei einer Aufheizrate von 10˚C/Minute ermittelte Schmelzpeak.

Die thermoplastischen Polymerpartikel enthalten 1 bis 45 Gewichtsprozent, bevorzugt 4 bis 35 Gew.-%, besonders bevorzugt 7 bis 15 Gewichtsprozent eines Polyolefins B1). Als Polyolefin B1) wird bevorzugt ein. Homo- oder Copolymerer von Ethylen und/oder Propylen mit einer Dichte im Bereich von 0,91 bis 0,98 g/L (bestimmt nach ASTM D792), insbesondere Polyethylen eingesetzt. Als Polypropylene kommen insbesondere Spritzgusstypen in Betracht. Als Polyethylene kommen kommerziell erhältliche Homopolymere aus Ethylen, wie PE-LD (Spritzgusstypen), -LLD, -HD, oder Copolymere aus Ethylen und Propylen (z. B Moplen® RP220 und Moplen® RP320 der Basell oder Versify®-Typen der Dow), Ethylen und Vinylacetat (EVA), E-thylenacrylate (EA) oder Ethylen-Butylen-Acrylate (EBA) in Frage. Der Schmelzevolumenindex MVI (190˚C/2,16 kg) der Polyethylene liegt üblicherweise im Bereich von 0,5 bis 40 g/10 min, die Dichte im Bereich von 0,91 bis 0,95 g/cm$^3$. Außerdem können Abmischungen mit Polyisobuten (PIB)(z.B. Oppanol® B150 der BASF Aktiengesellschaft) eingesetzt werden. Besonders bevorzugt wird LLDPE mit einem Schmelzpunkt im Bereich von 110 bis 125˚C und einer Dichte im Bereich von 0,92 bis 0,94 g/L eingesetzt.

Als Komponente B1) eigen sich auch Olefinblockcopolymere, welche sich aus einem Polyolefinblock PB1 (Hartblock) und einem Polyolefinblock PB2 (Weichblock) zusammensetzen, wie sie beispielsweise in WO 2006/099631 beschrieben sind. Der Polyolefinblock PB1 besteht bevorzugt aus 95 bis 100 Gew.-% Ethylen. Der PB2-Block besteht bevorzugt aus Ethylen und α-Olefin, wobei als α-Olefine Styrol, Propylen, 1-Buten, 1-Hexen, 1-Octen, 4-Methyl-1-Penten, Norbornene, 1-Decen, 1,5-Hexadien oder Mischungen davon in Betracht kommen. Bevorzugt wird als PB2-Block ein Ethylen-α-Olefin-Copolymerblock mit 5 bis 60 Gew.-% -α-Olefin, insbesonder ein Ethylen-Octen-Copolymerblock. Bevorzugt sind Multiblockcopolymere der Formel (PB1-PB2)n, wobei n für eine ganze Zahl zwischen 1 bis 100 steht. Die Blöcke PB1 und PB2 bilden im wesentlich eine lineare Kette und sind bevorzugt alternierend oder statistisch verteilt. Der Anteil der PB2-Blöcke beträgt bevorzugt 40 bis 60 Gew.-%, bezogen auf des Olefinblockcopolymer. Besonders bevorzugt sind Olefinblockcopolymer mit alternierenden, harten PB1-Blöcken und weichen, elastomeren PB2-Blöcken, die im Handel unter der Bezeichnung INFU-SE® erhältlich sind.

Mit geringerem Anteil an Polyolefin B1) nimmt das Treibmittelhaltevermögen deutlich zu. Damit werden die Lagerfähigkeit und die Verarbeitbarkeit der expandierbaren, thermoplastischen Polymerpartikel deutlich verbessert. Im Bereich von 4 bis 20 Gew.-% Polyolefin erhält man expandierbare thermoplastische Polymerpartikel mit langer Lagerfähigkeit, ohne dass sich die elastischen Eigenschaften des daraus hergestellten Partikelschaumstoffs verschlechtern. Dies zeigt sich beispielsweise in einem geringern Entformungsrest $\varepsilon_{rest}$ im Bereich von 25 bis 35 %.

Als Polyolefin B2) enthalten die expandierbaren, thermoplastischen Polymerpartikel enthalten 0 bis 25 Gewichtsprozent, bevorzugt 1 bis 15 Gew.-%, besonders bevorzugt 5 bis 10 Gewichtsprozent eines Polyolefins B2) mit einem Schmelzpunkt unter 105˚C. Das Polyolefin B2) weist vorzugsweise eine Dichte im Bereich von 0,86 bis 0,90 g/L (bestimmt nach ASTM D792) auf. Hierfür eignen sich insbesondere thermoplastische Elastomere auf Basis von Olefinen (TPO). Besonders bevorzugt werden Ethylen-Octen-Copolymere, die beispielsweise im Handel unter der Bezeichnung Engage® 8411 von der Firma Dow erhältlich sind. Expandierbare, thermoplastische Polymerpartikel, die die Komponente B2) enthalten, zeigen nach der Verarbeitung zu Schaumstoffformteilen eine deutliche Verbesserung in der Biegearbeit und Reißfestigkeit.

Komponenten C

Es ist aus dem Bereich der mehrphasigen Polymersysteme bekannt, dass die meisten Polymere nicht oder nur geringfügig miteinander mischbar sind (Flory), so dass es je nach Temperatur, Druck und chemischer Zusammensetzung zur Entmischung in jeweilige Phasen kommt. Werden unverträgliche Polymere kovalent miteinander verknüpft, so findet die Entmischung nicht auf makroskopischer, sondern lediglich auf mikroskopischer Ebene statt, d.h. auf der Längenskala der einzelnen Polymerkette. In diesem Fall spricht man daher von Mikrophasenseparation. Daraus resultieren eine Vielzahl von mesoskopischen Strukturen, z.B. lamellare, hexagonale, kubische und bikontinuierliche Morphologien, die eine starke Verwandtschaft mit lyotropen Phasen aufweisen.

Zur gezielten Einstellung der gewünschten Morphologie werden Verträglichkeitsvermittler (Komponenten C) eingesetzt. Eine Verbesserung der Verträglichkeit wird erfindungsgemäß durch die Verwendung einer Mischung von Styrol-Butadien- oder Styrol-Isopren-Blockcopolymeren als Komponente C1) und Styrol-Etylen-Butylen-Blockcopolymeren (SEBS) als Komponente C2) erreicht.

Die Verträglichkeitsvermittler führen zu einer verbesserten Haftung zwischen Polyolefinreichen und Styrolpolymerreichen Phasen und verbessern schon in geringen Mengen die Elastizität des Schaumstoffs deutlich gegenüber herkömmlichen EPS-Schaumstoffen. Untersuchungen zur Domänengröße der Polyolefinreichen Phase zeigten, dass der Verträglichkeitsvermittler durch Reduktion der Grenzflächenspannung kleine Tröpfchen stabilisiert.

Besonders bevorzugt bestehen die expandierbaren, thermoplastischen Polymerpartikel aus einer mehrphasigen treibmittelhaltigen Polymermischung mit mindestens einer kontinuierlichen Phase und mindestens zwei in der kontinuierlichen Phase verteilten dispersen Phasen P1 und P2 , wobei

    a) die kontinuierliche Phase im wesentlichen aus der Komponenten A,

    b) die erste disperse Phase P1 im wesentlichen aus den Komponenten B1 und B2 und

    c) die zweite disperse Phase P2 im wesentlichen aus der Komponente C1 bestehen.

Die Komponenten C2) bildet bevorzugt eine Phasengrenzfläche zwischen der dispersen Phase P1 und der kontinuierlichen Phase.

Durch diese zusätzliche disperse Phase ist es möglich, bei einem höheren Weichphasenanteil die Domänengröße der dispersen Phase < 2 $\mu$m zu halten. Dies führt bei gleicher Expandierbarkeit zu einer höheren Biegearbeit im Parikelschaumstoff.

Bevorzugt liegt in den expandierbaren, thermoplastischen Polymerpartikeln die Summe der Komponenten C1) und C2) im Bereich von 3,5 bis 30 Gewichtsprozent, besonders bevorzugt im Bereich von 6,8 bis 18 Gewichtsprozent.

Bevorzugt liegt das Gewichtsverhältnis der Summe aus den Komponenten B1) und B2) zur Komponenten C2) in den expandierbaren, thermoplastischen Polymerpartikeln bevorzugt im Bereich von 5 bis 70.

Das Gewichtsverhältnis der Komponenten C1) zu C2) liegt in den expandierbaren, thermoplastischen Polymerpartikeln bevorzugt im Bereich von 2 bis 5.

Die expandierbaren, thermoplastischen Polymerpartikel enthalten als Komponente C1) 0,1 bis 25 Gewichtsprozent, bevorzugz 1 bis 15 Gewichtsprozent, insbesondere 6 bis 9,9 Gewichtsprozent eines Styrol-Butadien- oder Styrol-Isopren-Blockcopolymeren.

Hierfür eignen sich beispielsweise Styrol-Butadien- oder Styrol-Isopren-Blockcopolymere. Der Gesamtdiengehalt liegt bevorzugt im Bereich von 20 bis 60 Gew.-%, besonders bevorzugt im Bereich von 30 bis 50 Gew.-%, der Gesamtstyrolgehalt liegt entsprechend bevorzugt im Bereich von 40 bis 80 Gew.-%, besonders bevorzugt im Bereich von 50 bis 70 Gew.-%.

Als Verträglichkeitsvermittler werden bevorzugt Styrol-Butadien-Styrol (SBS) Dreiblockcopolymere mit einem Butadiengehalt von 20 bis 60 Gew.-%, bevorzugt 30 bis 50 Gew.-%, welche teilweise hydriert oder nicht hydriert sein können, verwendet Diese sind beispielsweise unter der Bezeichnung Styroflex® 2G66, Styrolux® 3G55, Styroclear® GH62, Kraton® D 1101, Kraton® D 1155, Tuftec® H1043 oder Europren® SOL T6414 im Handel. Dabei handelt es sich um SBS-Blockcopolymerer mit scharfen Übergängen zwischen B- und S-Blöcken.

Als Komponente C2) enthalten die expandierbaren, thermoplastischen Polymerpartikel 0,1 bis 10 Gewichtsprozent, bevorzugt 1 bis 9,9 Gew.-%, insbesondere 0,8 bis 5 Gewichtsprozent eines Styrol-Etylen-Butylen-Blockcopolymeren (SEBS). Geeignete Styrol-Etylen-Butylen-Blockcopolymere (SEBS) sind beispielsweise solche, die durch Hydrierung der olefinischen Doppelbindungen der Blockcopolymeren C1) erhältlich sind. Geeignete Styrol-Ethylen-Butylen-Blockcopolymere sind beispielsweise die im Handel erhältlichen Kraton® G Typen, insbesondere Kraton® G 1650.

Nach dem erfindungsgemäßen Verfahren sind expandierbare thermoplastische Polymerpartikel mit Hohlräumen mit einem mittleren Durchmesser im Bereich von 0,1 bis 50 $\mu$m, bevorzugt 1 bis 30 $\mu$m erhältlich.

Bevorzugt weisen die expandierbaren thermoplastischen Polymerpartikel einen mittleren Durchmesser im Bereich von 0,2 bis 2,5 mm und 50 bis 300, bevorzugt 70 bis 150 Hohlräumen/mm$^2$ Querschnittsfläche auf. Die Anzahl der Hohlräume kann beispielsweise durch Auszählen eines Dünnschichtes durch die Polymerpartikel unter einem optischen Mikroskop erfolgen.

Ihre Schüttdichte liegt bevorzugt im Bereich von 500 bis 590, bevorzugt 520 bis 580 kg/m$^3$.

Die vornukleierte Struktur der expandierbaren Granulate ermöglicht eine erleichterte Schäumbarkeit, eine kontrollierte Einstellung der Zellgröße und damit eine wesentliche Verbesserung der Verarbeitungs- und Schaumstoffeigenschaften.

Zur Verbesserung der Verarbeitbarkeit können die fertigen expandierbaren thermoplastischen Polymerpartikel durch Glycerinester, Antistatika oder Antiverklebungsmittel beschichtet werden.

Bevorzugt werden die erhaltenen runden oder ovalen Partikel auf einen Durchmesser im Bereich von 0,2 bis 10 mm aufgeschäumt. Ihre Schüttdichte liegt vorzugsweise im Bereich von 10 bis 100 g/l.

Die Verschweißung der vorgeschäumten Schaumstoffperlen zum Formteil und die daraus resultierenden mechanischen Eigenschaften werden insbesondere durch Beschichtung der expandierbaren thermoplastischen Polymerpartikel mit einem Glycerinstearat verbessert. Besonders bevorzugt wird eine Beschichtung aus 50 bis 100 Gew.-% Glycerintristearat (GTS), 0 bis 50 Gew.-% Glycerinmonostearat (GMS) und 0 bis 20 Gew.-% Kieselsäure verwendet.

Die expandierbaren, thermoplastischen Polymerpartikel können mittels Heißluft oder Wasserdampf zu Schaumpartikeln mit einer Dichte im Bereich von 8 bis 200 kg/m$^3$, bevorzugt im Bereich von 10 bis 80 kg/m$^3$, insbesondere im Bereich von 10 bis 50 kg/m$^3$ vorgeschäumt und anschließend in einer geschlossenen Form zu Schaumstoffformkörpern verschweißt werden. Üblicherweise wird ein Überdruck im Bereich von 0,5 bis 1,5 bar, insbesondere 0,7 bis 1,0 bar angewendet.

Durch die Anwendung des Konzepts können zur Erreichung vergleichbarer Dichten die Treibmittelgehalte im Vergleich zu Standard-EPS deutlich reduziert werden, wodurch treibhausförderne Treibmittel eingespart werden können. Niederere Mindestschüttdichte n lassen sich so bei gleichem Treibmittelgehalt erreichen. Des Weiteren können vornukleierte Granulate wesentlich leichter erneut mit Treibmitteln imprägniert werden, beispielsweise bei Treibmittelverlust durch Lagerung oder Transport. Da die Vornukleierung mittels Stickstoff oder andern Inertgasen erfolgen kann, die zuvor aus der Atmosphäre gewonnen wurden, handelt es sich um ein umwelt- und resorcensconendes Konzept zur Verbesserung der Expansionsfähigkeit von thermoplastischen Partikelschaumstoffen und zur besseren Einstellung der Zellstruktur.

In größeren Mengen wirken die eingesetzten, Hohlräume bildenden Co-Treibmittel F) in der Regel stark plastifizierend. Durch die viskositätserniedrigende Wirkung des Co-Treibmittels F) kann somit bei ansonsten identischer Rezeptur der Durchsatz bei identischer Temperaturführung erhöht oder die Schmelzetemperatur bei identischem Durchsatz reduziert werden. Der Druckabfall in druckverbrauchenden Apparaten wie beispielsweise Lochplatten bzw. Mischern bleibt dabei identisch, da das Material eine identische Schmelzeviskosität aufweist. Im ersten Fall kann somit die Temperaturbelastung des Materials reduziert und auch thermisch empfindliche Materialien wie Flammschutzmittel eingearbeitet werden. Im zweiten Fall ist durch die Durchsatzerhöhung bei identischer Anlagenausstattung / Druckstufe der Apparate eine wirtschaftlichere Herstellung der expandierbaren Partikel möglich.

Ein weiterer Aspekt ist, dass der Anteil des eigentlichen Treibmittels ohne Änderung der Schmelzeviskosität reduziert werden kann, ohne den Durchsatz der Anlage oder die Prozessführung anpassen zu müssen. Aufgrund der höheren Löslichkeit in Polymeren ist als plastifizierendes Co-Treibmittel F) Kohlendioxid zu bevorzugen.

Die nach dem erfindungsgemäßen Verfahren erhaltenen expandierbaren thermoplastischen Polymerpartikel können zu Schaumstoffen mit höherer Zellzahl, d.h. feiner Zellstruktur verarbeitet werden. Durch die homogene Schaumstruktur werden die mechanischen Eigenschaften und die Wärmedämmung der Schaumstoffe verbessert.

Ein weiterer Effekt ist die Reduktion der Energiekosten bei der Schaumstoffverabeitung. Durch das schnellere Vorschäumen können höhere Durchsätze erreicht werden. Durch die geringeren Treibmittelgehalte in Kombination mit der Vornukleierung können die Entformzeiten deutlich reduziert und die Zykluszeiten beim Ausschäumen verkürzt werden.

Beispiele

Einsatzstoffe:

Komponente A:

Polystyrol mit einem Schmelzeviskositätsindex MVI (200˚C/5kg) von 2,9 cm$^3$/10 min (PS 158K der BASF SE, Mw = 280.000 g/mol, Viskositätszahl VN 98 ml/g)

Komponente B:

B1: Polyethylen PE-LLD (LL1201 XV, Exxon Mobile, Dichte 0,925 g/L, MVI = 0,7 g/10 min, Schmelzpunkt 123˚C)
B2: Polyethylen Ethylen-Octen-Copolymer (Engage® 8402 der Dow, Dichte 0,880 g/L, MVI = 18 g/10 min, Schmelzpunkt 72˚C)

Komponente C:

C1.1: Styrolux® 3G55, Styrol-Butadien-Blockcopolymer der BASF SE,
C1.2 Styroflex® 2G66, thermoplastisch elastisches Styrol-Butadien-Blockcopolymer (S-TPE) der BASF SE,
C2: Kraton G 1651, Styrol-Ethylen-Butylen-Blockcopolymer der Kraton Polymers LLC

Komponente D:

D Nukleierungsmittel: Talkum

Komponente E:

E Treibmittelmischung aus 95 Gew.-% iso-Pentan und 5 Gew.-% n-Pentan

Komponente F:

F Co-Treibmittel Stickstoff (Beispiel B1 - B17), Kohlendioxid (Beispiel B19 - B36)

Herstellung der expandierbaren Granulate B1 - B11

Die Herstellung der expandierbaren Granulate erfolgte nach einem Schmelzeimprägnierverfahren unter Verwendung statischer Mischapparate. Dazu wurden zunächst die Polymere in einem Extruder plastifiziert und über eine Schmelzepumpe in eine Serie von statischen Mischern und Wärmetauschern gefördert. Am Eingang des ersten statischen Mischers wurde technisches iso-Pentan (95 % iso-Pentan / 5 % n-Pentan) zusammen mit dem Co-Treibmittel F) zugegeben und die Schmelze imprägniert. Die entsprechenden Rezepturen sind der Tabelle 1 zu entnehmen. Anschließend wurde die Schmelzetemperatur über einen Wärmetauscher reduziert und die Schmelzetemperatur über einen weiteren statischen Mischer homogenisiert. Durch eine weitere Schmelzepumpe wurde Druck aufgebracht, um das Material über eine Lochplatte (49 Löcher ä 0.60 mm) mit einer drucküberlagerten Unterwassergranulierung zu granulieren (Wasserdruck 12 bar, Wassertemperatur 50 ˚C). Die mittlere Partikelgröße betrug ca. 1.25 mm. Der Gesamtdurchsatz betrug 70 kg/h. Die Schmelzetemperatur am Düsenaustritt lag bei ca. 203 °C.

Tabelle 1: Zusammensetzung (Gewichtsteile) der expandierbaren Granulate B1 - B11

|  | B1 | B2 | B3 | B4 | B5 | B6 | B7 | B8 | B9 | B10 | B11 |
|---|---|---|---|---|---|---|---|---|---|---|---|
| Komponente A | 70,2 | 70,25 | 70,2 | 70,15 | 70,1 | 70,05 | 70 | 70,1 | 70,1 | 71,3 | 71,2 |
| Komponente B1 | 11,7 | 11,7 | 11,7 | 11,7 | 11,7 | 11,7 | 11,7 | 11,7 | 11,7 | 11,7 | 11,7 |
| Komponente B2 | 3,9 | 3,9 | 3,9 | 3,9 | 3,9 | 3,9 | 3,9 | 3,9 | 3,9 | 3,9 | 3,9 |
| Komponente C1.1 |  |  |  |  |  |  |  | 7,8 | 7,8 | 7,8 | 7,8 |
| Komponente C1.2 | 7,8 | 7,8 | 7,8 | 7,8 | 7,8 | 7,8 | 7,8 |  |  |  |  |
| Komponente C2 |  |  |  |  |  |  |  |  | 1,0 | 1,0 | 1,0 |
| Komponente D (Talkum) | 0,5 | 0,5 | 0,5 | 0,5 | 0,5 | 0,5 | 0,5 | 0,5 | 0,5 | 0,5 | 0,5 |
| Komponente E (Treibmittel) | 5,9 | 5,8 | 5,8 | 5,8 | 5,8 | 5,8 | 5,8 | 5,8 | 5,8 | 4,8 | 4,8 |
| Komponente F (Stickstoff) |  | 0,05 | 0,10 | 0,15 | 0,20 | 0,25 | 0,30 | 0,20 | 0,20 | 0,05 | 0,10 |

Analytik der expandierbaren Granulate

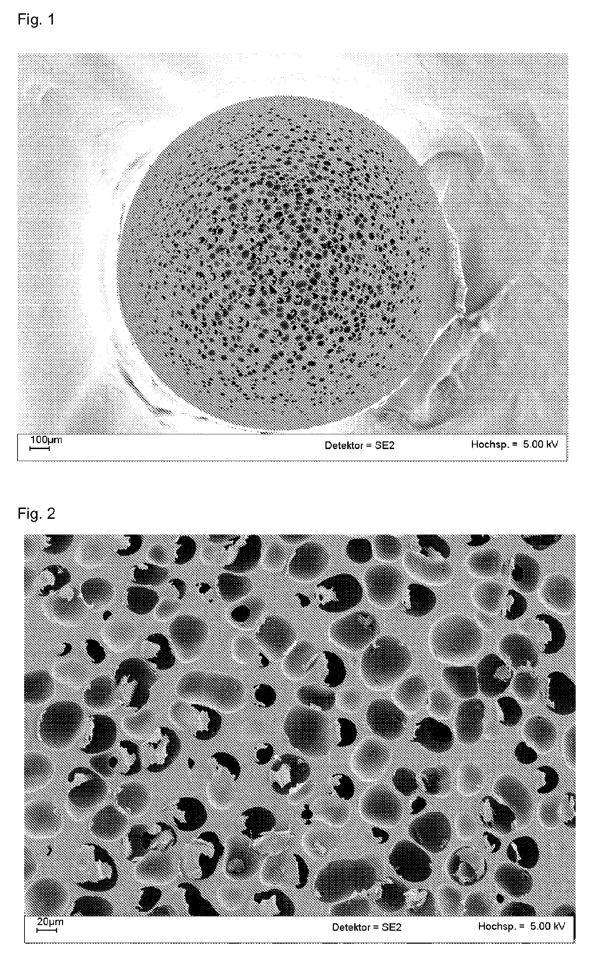

Die transmissionselektronenmikroskopischen Aufnahmen (TEM) zeigen die zellulären Strukturen der treibmittelhaltigen Granulate in Form von spheroiden Zellen (dunkle Bereiche, Fig.1), die später zur besseren Expansionsfähigkeit und feineren Zellstruktur im Schaum beitragen. Die Zellen der treibmittelbeladenen Granulate liegen dabei in der Größenordnung unter 50 $\mu$m, in den Aufnahmen sind Zellgrößen bis 1 $\mu$m deutlich erkennbar.

Verarbeitung und Charakterisierung der expandierbaren Granulate

Als Beschichtungskomponenten wurde 70 Gew.-% Gycerintristearat (GTS) und 30 Gew.-% Glycerinmonostearat (GMS) verwendet.
Das treibmittelhaltige Granulat wurde in einem EPS-Vorschäumer zu Schaumperlen geringer Dichte (15 - 25 g/L vorgeschäumt) und in einem EPS-Formteilautomaten bei einem Überdruck von 0,7 - 1,1 bar zu Formteilen verarbeitet.
An den Formteilen wurden verschiedene mechanische Messungen durchgeführt. Bei den erfindungsgemäßen Beispielen wird im Vergleich zum reinen EPS eine deutliche Elastifizierung beobachtet, die an dem sehr hohen Rückstellungsvermögen erkennbar ist. Die Druckfestigkeit wurde bei 10% Stauchung nach DIN-EN 826 und die Biegefestigkeit nach DIN-EN 12089 bestimmt. Die Biegearbeit wurde aus den Messwerten zur Biegefestigkeit ermittelt.
In der Tabelle 2 sind die Verarbeitungsparameter wie Vorschäumzeit und Entformzeit aufgenommen. Es ist deutlich zu erkennen, das sich durch die Zugabe von Stickstoff eine Verringerung der Vorschäumzeit und Entformzeit ergeben. Auch die Zellgröße konnte deutlich verringert werden. Zudem konnte ohne Verschlechterung der Eigenschaften der Treibmittelgehalt gegenüber der Referenz deutlich reduziert werden.

Tabelle 2: Verarbeitung und Eigenschaften der aus Beispiel B1 - B15 erhaltenen Schaumstoffpartikel

|  | B1 | B2 | B3 | B4 | B5 | B6 | B7 | B8 | B9 | B10 | B11 |
|---|---|---|---|---|---|---|---|---|---|---|---|
| Partikelschüttdichte [g/L] | 615 | 605 | 600 | 560 | 550 | 530 | 520 | 530 | 530 | 560 | 540 |
| Partikelgröße d' [mm] | 1,26 | 1,27 | 1,26 | 1,28 | 1,26 | 1,27 | 1,28 | 1,29 | 1,27 | 1,26 | 1,27 |
| Vorschäumzeit bei 0,1 bar [s] | 218 | 178 | 154 | 119 | 108 | 89 | 90 | 92 | 85 | 193 | 157 |
| Schüttdichte Schaumperle [g/L] | 21,3 | 20,8 | 20,6 | 21,3 | 20,5 | 20,8 | 20,5 | 20,4 | 20,8 | 20,5 | 20,9 |
| Zeit minmale Schüttdichte [s] | 660 | 650 | 630 | 540 | 360 | 300 | 240 | 290 | 250 | 360 | 420 |

(fortgesetzt)

| | B1 | B2 | B3 | B4 | B5 | B6 | B7 | B8 | B9 | B10 | B11 |
|---|---|---|---|---|---|---|---|---|---|---|---|
| Minimale Schüttdichte [g/L] | 20,0 | 19,2 | 17,9 | 17,5 | 17,2 | 17,2 | 16,7 | 17,2 | 17,2 | 19,2 | 17,9 |
| Formteildichte [g/L] | 22,2 | 20,9 | 20,5 | 22,0 | 20,4 | 21,3 | 21,0 | 22,1 | 21,2 | 21,4 | 21,1 |
| Entformzeit [s] | 454 | 426 | 402 | 370 | 344 | 297 | 236 | 289 | 273 | 219 | 195 |
| Zellzahl [1/mm] | 1,5 | 1,7 | 2,1 | 4,8 | 5,6 | 6,0 | 7,2 | 6,1 | 6,0 | 4,5 | 5,0 |
| Biegefestigkeit [kPa] | 295 | 291 | 270 | 268 | 265 | 252 | 261 | 283 | 292 | 279 | 268 |
| Biegearbeit [Nm] | 5,3 | 5,1 | 4,8 | 4,5 | 4,8 | 4 | 4,2 | 4,5 | 4,9 | 5,3 | 5,1 |
| Druckfestigkeit s =10% [kPa] | 103 | 99 | 9 | 96 | 92 | 93 | 90 | 100 | 98 | 92 | 91 |
| Entformungsrest [%] | 23 | 23 | 23 | 31 | 31 | 30 | 39 | 28 | 25 | 32 | 34 |

Herstellung der expandierbaren Granulate B 12 - B 17

Die Herstellung der expandierbaren Granulate erfolgte nach einem Schmelzeimprägnierverfahren. Dazu wurden zunächst Polystyrol 158 K (Komponente A) in einem Extruder plastifiziert. Die Schmelze wurde im Extruder mit technischem iso-Pentan (95 % iso-Pentan / 5 % n-Pentan) zusammen mit dem Co-Treibmittel F) imprägniert und homogenisiert. Die entsprechenden Rezepturen sind der Tabelle 3 zu entnehmen. Durch eine Schmelzepumpe am Extruderkopf wurde Druck aufgebracht, um das Material über eine Lochplatte (2 Löcher ä 0.65 mm) mit einer drucküberlagerten Unterwassergranulierung zu granulieren (Wasserdruck 12 bar, Wassertemperatur 47 ˚C). Die mittlere Partikelgröße betrug ca. 1.25 mm. Der Gesamtdurchsatz betrug 4.5 kg/h. Die Schmelzetemperatur am Düsenaustritt lag bei ca. 210 ˚C.

Tabelle 3: Zusammensetzung der expandierbaren Granulate, Verarbeitung und Eigenschaften der aus Beispiel B12 - B17 erhaltenen Schaumstoffpartikel

| | | B12 | B13 | B14 | B15 | B16 | B17 |
|---|---|---|---|---|---|---|---|
| Komponente A (GPPS) | | 93,4 | 93,3 | 93,1 | 93,9 | 93,8 | 93,6 |
| Komponente D (Talkum) | | 0,5 | 0,5 | 0,5 | - | - | - |
| Komponente E (Treibmittel) | | 6,1 | 6,1 | 6,1 | 6,1 | - | - |
| Komponente F (Stickstoff) | | - | 0,10 | 0,30 | 0,15 | 0,10 | 0,30 |
| Partikelschüttdichte | g/L | 550 | 470 | 360 | 620 | 610 | 420 |
| Partikelgröße d' | mm | 1,57 | 1,58 | 1,59 | 1,59 | 1,60 | 1,58 |
| Vorschäumzeit bei 0,1 bar | s | 63 | 40 | 31 | 256 | 240 | 38 |
| Schüttdichte Schaumperle | g/L | 20,5 | 21,3 | 21,2 | 20,6 | 20,2 | 21,3 |
| Zeit minmale Schüttdichte | s | 420 | 240 | 120 | 540 | 360 | 150 |
| Minimale Schüttdichte | g/L | 13,5 | 12,2 | 13,5 | 20,0 | 17,9 | 12,8 |
| Formteildichte | g/L | 21,4 | 22,7 | 21,6 | 20,3 | 15,2 | 22,6 |
| Entformzeit | s | 56 | 114 | 52 | 36 | 87 | 469 |

(fortgesetzt)

| | | B12 | B13 | B14 | B15 | B16 | B17 |
|---|---|---|---|---|---|---|---|
| Zellzahl | 1/mm | 6,1 | 9,3 | 16,8 | 0,6 | 1,2 | 7,4 |
| Biegefestigkeit | kPa | 314 | 342 | 263 | 118 | 99 | 317 |
| Biegearbeit | Nm | 3,3 | 4,2 | 3,3 | 1,8 | 1,4 | 3,5 |
| Druckfestigkeit □=10% | kPa | 139 | 138 | 116 | 41 | 33 | 140 |
| Entformungsrest | % | 34 | 31 | 52 | 57 | 48 | 36 |

Fig. 1 und Fig. 2 zeigen transmissionselektronenmikroskopische Aufnahmen in unterschiedlicher Vergrößerung eines Dünnschnittes durch ein expandierbares Granulat aus Beispiel 13 mit den homogen verteilten Hohlräumen im Innern der Granulatpartikel.

Herstellung der expandierbaren Granulate

Die Herstellung der expandierbaren Granulate erfolgte nach einem Schmelzeimprägnierverfahren unter Verwendung statischer Mischapparate. Dazu wurden zunächst die Polymere in einem Extruder plastifiziert und über eine Schmelzepumpe in eine Serie von statischen Mischern und Wärmetauschern dosiert. Am Eingang des ersten statischen Mischers wurde technisches iso-Pentan (95 % iso-Pentan / 5 % n-Pentan) zusammen mit dem Co-Treibmittel F) zugegeben und die Schmelze imprägniert. Die entsprechenden Rezepturen sind der Tabelle zu entnehmen. Anschließend wurde die Schmelzetemperatur über einen Wärmetauscher reduziert und die Schmelzetemperatur über einen weiteren statischen Mischer homogenisiert. Durch eine weitere Schmelzepumpe wurde Druck aufgebracht, um das Material über eine Lochplatte (2 Löcher ä 0.65 mm) mit einer drucküberlagerten Unterwassergranulierung zu granulieren (Wasserdruck siehe Tabelle, Wassertemperatur 47 ˚C). Die mittlere Partikelgröße betrug ca. 1.25 mm. Der Gesamtdurchsatz betrug 4.5 kg/h. Die Schmelzetemperatur am Düsenaustritt lag bei ca. 207 ˚C.

Herstellung der expandierbaren Granulate Beispiel 19 bis 36

Die Herstellung der expandierbaren Granulate erfolgte nach einem Schmelzeimprägnierverfahren unter Verwendung statischer Mischapparate. Eine Übersicht über die Zusammensetzung der Materialien ist in Tab. 4 gegeben - die Mengenverhältnisse der Polymere bzw. des Talkums (Komponenten A-D) waren identisch den Beispielen 12 und 1, der Anteil des Treibmittels E) und des Co-Treibmittels F) wurden variiert. Dazu wurden zunächst die Polymere in einem Extruder plastifiziert und über eine Schmelzepumpe in eine Serie von statischen Mischern und Wärmetauschern dosiert. Am Eingang des ersten statischen Mischers wurde technisches iso-Pentan (95 % iso-Pentan / 5 % n-Pentan) zusammen mit dem Co-Treibmittel F) zugegeben und die Schmelze imprägniert. Es wurde analog Beispiel 12 und Beispiel 9 verfahren, wobei anstelle von Stickstoff $CO_2$ als Komponente F) zur Reduzierung der Temperaturbelastung eingesetzt wurde. Die entsprechenden Rezepturen sind der Tabelle zu entnehmen. Anschließend wurde die Schmelzetemperatur über einen Wärmetauscher reduziert und die Schmelzetemperatur über einen weiteren statischen Mischer homogenisiert. Durch eine weitere Schmelzepumpe wurde Druck aufgebracht, um das Material über eine Lochplatte (2 Löcher ä 0.65 mm) mit einer drucküberlagerten Unterwassergranulierung zu granulieren (Wasserdruck siehe Tabelle, Wassertemperatur 47 ˚C). Die mittlere Partikelgröße betrug ca. 1.25 mm. Der Gesamtdurchsatz betrug 4.5 kg/h.

Zum Nachweis der plastifizierenden Wirkung und den möglichen Durchsatzerhöhungen bzw. reduzierten Schmelzetemperaturen wurde jeweils der Druckverlust über einen statischen Mischer als Maß für die Schmelzeviskosität verwendet. Der verwendete statische Mischer hatte einen Durchmesser von 25 mm und ein L/D-Verhältnis von 15. Der Druckverlust skaliert dabei mit der Viskosität im laminaren Bereich wie folgt:

$$\Delta p = \text{Re Ne } \overline{\eta} \, \overline{w} \, \frac{L}{D^2}$$

wobei Re, Ne, $\overline{\eta}$, $\overline{w}$, L und D die Reynolds number, the Ne-Zahl, die mittlere Scherviskosität, die mittlere Fließgeschwindigkeit, die Länge des statischen Mischers und den Durchmesser des statischen Mischers bezeichnen. Für statische Mischer der Bauform CSE-X/8 ist das Produkt aus Ne und Re konstant und beträgt 1200. Die mittlere Fließgeschwindigkeit beträgt:

$$\overline{w} = \frac{\dot{V}}{A} = \frac{(\dot{m}/\rho)}{\pi (D^2/4)}$$

wobei $\dot{V}$, $\dot{m}$, $\rho$ und A der volumetrische Durchsatz, der massenbezogene Durchsatz, die Schmelzedichte und die Querschnittsfläche des Mischers sind. Die mittlere Scherviskosität der Polymerschmelze, $\overline{\eta}$, bei der mittleren Scherrate, $\overline{\dot{\gamma}}$, berechnet sich zu:

$$\overline{\eta}(\overline{\dot{\gamma}}) = \eta\left(\frac{64}{D} \cdot \frac{(\dot{m}/\rho)}{\pi (D^2/4)}\right)$$

Basierend auf diesen Grundlagen wurde die Scherviskosität der Schmelze bei unterschiedlichen Temperaturen und Durchsätzen ermittelt (Tab. 4). Angegeben ist jeweils der Einfluss von $CO_2$ auf die Viskosität und auf den Druckverlust (am statischen Mischer / Additivmischer) bei Beispiel 19 bis 36. Der Druckverlust ist dabei eine technisch begrenzende Größe, da nur ein maximaler Druckverlust am Mischer und ein Gesamtdruck im System zulässig ist. Durch die Verwendung von $CO_2$ kann bei identischem Druckverlust zum System, das lediglich Pentan enthält, die Temperaturbelastung reduziert (24 / 25, 33 / 34) oder der Durchsatz erhöht werden (2E / 27, 35 / 36). Das Schäumverhalten wird durch die Verwendung von $CO_2$ dabei nicht negativ beeinflusst.

| Beispiel | Komponenten ohne Treibmittel | Gesamtsurchsatz | Pentan | CO2 | Druckverlust | Mittlere Viskosität | Temperatur |
|---|---|---|---|---|---|---|---|
| | | (kg/h) | (Gew.-%) | (Gew.-%) | (bar) | (Pa.s) | (˚C) |
| B19 | B12 | 4,5 | 6,5% | 0,0% | 26 | 1.276 | 183 |
| B20 | B12 | 4,5 | 3,8% | 0,0% | 65 | 3.212 | 183 |
| B21 | B12 | 4,5 | 3,8% | 0,5% | 56 | 2.756 | 183 |
| B22 | B12 | 4,5 | 3,8% | 1,0% | 47 | 2.304 | 182 |
| B23 | B12 | 4,5 | 3,7% | 2,8% | 30 | 1.467 | 183 |
| B24 | B12 | 4,5 | 3,8% | 1,0% | 64 | 3.140 | 175 |
| B25 | B12 | 4,5 | 3,7% | 2,8% | 66 | 3.238 | 158 |
| B26 | B12 | 6,2 | 3,8% | 1,0% | 62 | 2.208 | 183 |
| B27 | B12 | 11,0 | 3,7% | 2,8% | 64 | 1.285 | 183 |
| B28 | B1 | 4,5 | 6,1% | 0,0% | 48 | 2.314 | 187 |
| B29 | B1 | 4,5 | 6,1% | 0,5% | 44 | 2.127 | 186 |
| B30 | B1 | 4,5 | 6,0% | 0,9% | 40 | 1.906 | 186 |
| B31 | B1 | 4,5 | 6,0% | 1,4% | 36 | 1.703 | 186 |
| B32 | B1 | 4,5 | 6,0% | 1,8% | 32 | 1.546 | 186 |
| B33 | B1 | 4,5 | 6,0% | 0,9% | 46 | 2.207 | 178 |
| B34 | B1 | 4,5 | 6,0% | 1,8% | 47 | 2.255 | 169 |
| B35 | B1 | 6,1 | 6,0% | 0,9% | 48 | 1.699 | 186 |
| B36 | B1 | 8,0 | 6,0% | 1,8μ | 46 | 1.241 | 186 |

**Patentansprüche**

1. Verfahren zur Herstellung von Hohlräume enthaltenden, expandierbaren, thermoplastischen Polymerpartikeln durch Extrusion einer treibmittelhaltigen Polymerschmelze durch eine Düsenplatte und Granulierung in einer flüssigkeitsgefüllten Kammer unter einem Druck im Bereich von 1,5 bis 15 bar, **dadurch gekennzeichnet, dass** die treibmittelhaltige Polymerschmelze

   0,1 bis 5 Gew.-% eines Nukleierungsmittels D),
   1 bis 10 Gew.-% eines im Wesentlichen in den Polymerpartikeln verbleibenden Treibmittels E),
   0,01 bis 5 Gew.-% eines die Hohlräume bildenden Co-Treibmittels F),
   jeweils bezogen auf die treibmittelhaltige Polymerschmelze, enthält.

2. Verfahren nach Anspruch 1, **dadurch gekennzeichnet, dass** die treibmittelhaltige Polymerschmelze als Nukleierungsmittel D) Talkum, Siliziumdioxid, Mika, Ton, Zeolithe, Calciumcarbonat oder ein Polyethylenwachs enthält.

3. Verfahren nach Anspruch 1 oder 2, **dadurch gekennzeichnet, dass** die treibmittelhaltige Polymerschmelze als Treibmittel E) einen aliphatischen $C_3$ - $C_7$-Kohlenwasserstoff oder Mischungen davon enthält.

4. Verfahren nach einem der Ansprüche 1 bis 3, **dadurch gekennzeichnet, dass** die treibmittelhaltige Polymerschmelze als die Hohlräume bildendes Co-Treibmittel F) Stickstoff, Kohlendioxid, Argon, Helium oder Mischungen davon, enthält.

5. Verfahren nach einem der Ansprüche 1 bis 4, **dadurch gekennzeichnet, dass** die treibmittelhaltige Polymerschmelze weniger als 0,5 Gew.-% Wasser enthält.

6. Verfahren nach einem der Ansprüche 1 bis 5, **dadurch gekennzeichnet, dass** die flüssigkeitsgefüllte Kammer bei einer Temperatur im Bereich von 20 bis 80˚C betrieben wird.

7. Verfahren nach einem der Ansprüche 1 bis 5, **dadurch gekennzeichnet, dass**, die treibmittelhaltige Polymerschmelze

   A) 45 bis 97,79 Gewichtsprozent eines Styrolpolymeren,
   B1) 1 bis 45 Gewichtsprozent eines Polyolefins mit einem Schmelzpunkt im Bereich von 105 bis 140˚C,
   B2) 0 bis 25 Gewichtsprozent eines Polyolefins mit einem Schmelzpunkt unter 105˚C,
   C1) 0,1 bis 25 Gewichtsprozent eines Styrol-Butadien- oder Styrol-Isopren-Blockcopolymeren,
   C2) 0 bis 10 Gewichtsprozent eines Styrol-Ethylen-Butylen-Blockcopolymeren,
   D) 0,1 bis 5 Gew.-% eines Nukleierungsmittels,
   E) 1 bis 10 Gew.-% eines im Wesentlichen in den Polymerpartikeln verbleibenden Treibmittels,
   F) 0,01 bis 5 Gew.-% eines die Hohlräume bildenden Co-Treibmittels,
   jeweils bezogen auf die treibmittelhaltige Polymerschmelze, enthält.

8. Expandierbare thermoplastische Polymerpartikel mit Hohlräumen mit einem mittleren Durchmesser im Bereich von 0,1 bis 50 $\mu$m, erhältlich nach einem der Ansprüche 1 bis 7.

9. Expandierbare thermoplastische Polymerpartikel nach Anspruch 8, **dadurch gekennzeichnet, dass** sie eine mittleren Durchmesser im Bereich von 0,2 bis 2,5 mm und 50 bis 300 Hohlräumn/mm$^2$ Querschnittsfläche aufweisen.

10. Expandierbare thermoplastische Polymerpartikel nach Anspruch 8 oder 9, **dadurch gekennzeichnet, dass** sie eine Schüttdichte im Bereich von 500 bis 590 kg/m$^3$ aufweisen.

Fig. 1

100µm          Detektor = SE2          Hochsp. = 5.00 kV

Fig. 2

20µm          Detektor = SE2          Hochsp. = 5.00 kV

Europäisches
Patentamt

European
Patent Office

Office européen
des brevets

**EUROPÄISCHER RECHERCHENBERICHT**

Nummer der Anmeldung

EP 10 19 0893

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 987 293 A1 (SHELL INT RESEARCH [NL]) 22. März 2000 (2000-03-22) | 8-10 | INV. C08J9/18 C08J9/12 B29C44/34 |
| A | * Anspruch 8 * * Spalte 2, Absatz 10 - Spalte 3, Absatz 11 * * Spalte 9, Absatz 37 - Absatz 39 * ----- | 1 | ADD. C08L25/04 |
| A | WO 98/51735 A1 (BASF AG [DE]; GLUECK GUISCARD [DE]; HAHN KLAUS [DE]; KAEMPFER KNUT [DE] 19. November 1998 (1998-11-19) * Seite 10, Zeile 36 - Seite 11, Zeile 2 * ----- | 1 | |

| | RECHERCHIERTE SACHGEBIETE (IPC) |
|---|---|
| | C08J B29C |

Der vorliegende Recherchenbericht wurde für alle Patentansprüche erstellt

| Recherchenort | Abschlußdatum der Recherche | Prüfer |
|---|---|---|
| Den Haag | 28. März 2011 | Costantini, Nicola |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes
    Dokument

EPO FORM 1503 03.82 (P04C03)

# EP 2 452 968 A1

**Europäisches Patentamt**
**European Patent Office**
**Office européen des brevets**

## EUROPÄISCHER RECHERCHENBERICHT

Nummer der Anmeldung

EP 10 19 0893

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 987 293 A1 (SHELL INT RESEARCH [NL]) 22. März 2000 (2000-03-22) | 8-10 | INV. C08J9/18 C08J9/12 B29C44/34 |
| A | * Anspruch 8 * * Spalte 2, Absatz 10 - Spalte 3, Absatz 11 * * Spalte 9, Absatz 37 - Absatz 39 * ----- | 1 | ADD. C08L25/04 |
| A | WO 98/51735 A1 (BASF AG [DE]; GLUECK GUISCARD [DE]; HAHN KLAUS [DE]; KAEMPFER KNUT [DE] 19. November 1998 (1998-11-19) * Seite 10, Zeile 36 - Seite 11, Zeile 2 * ----- | 1 | |

RECHERCHIERTE SACHGEBIETE (IPC)

C08J
B29C

Der vorliegende Recherchenbericht wurde für alle Patentansprüche erstellt

| Recherchenort | Abschlußdatum der Recherche | Prüfer |
|---|---|---|
| Den Haag | 28. März 2011 | Costantini, Nicola |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes
    Dokument

EPO FORM 1503 03.82 (P04C03)

17

**EP 2 452 968 A1**

**ANHANG ZUM EUROPÄISCHEN RECHERCHENBERICHT
ÜBER DIE EUROPÄISCHE PATENTANMELDUNG NR.**

EP 10 19 0893

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-03-2011

| Im Recherchenbericht angeführtes Patentdokument | Datum der Veröffentlichung | Mitglied(er) der Patentfamilie | Datum der Veröffentlichung |
|---|---|---|---|
| EP 0987293 A1 | 22-03-2000 | AU 761299 B2 | 05-06-2003 |
| | | AU 6194299 A | 03-04-2000 |
| | | BR 9913763 A | 05-06-2001 |
| | | CA 2341273 A1 | 23-03-2000 |
| | | CN 1318080 A | 17-10-2001 |
| | | WO 0015703 A1 | 23-03-2000 |
| | | EP 1114090 A1 | 11-07-2001 |
| | | HU 0103666 A2 | 28-01-2002 |
| | | JP 2002524638 T | 06-08-2002 |
| | | NO 20011321 A | 08-05-2001 |
| | | PL 346696 A1 | 25-02-2002 |
| | | TW I224122 B | 21-11-2004 |
| | | US 6538042 B1 | 25-03-2003 |
| WO 9851735 A1 | 19-11-1998 | AT 196158 T | 15-09-2000 |
| | | AU 2897997 A | 08-12-1998 |
| | | DE 59702327 D1 | 12-10-2000 |
| | | EP 0981574 A1 | 01-03-2000 |
| | | ES 2151268 T3 | 16-12-2000 |
| | | JP 4324250 B2 | 02-09-2009 |
| | | JP 2001525001 T | 04-12-2001 |
| | | US 6340713 B1 | 22-01-2002 |

EPO FORM P0461

Für nähere Einzelheiten zu diesem Anhang : siehe Amtsblatt des Europäischen Patentamts, Nr.12/82

18

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009000872 A
- WO 2009112549 A
- WO 2004022636 A
- DE 19819058
- WO 2005092959 A
- EP 846141 A
- EP 987292 A
- EP 1000115 B

- US 2864778 A
- US 3328497 A
- US 5391581 A
- US 20060022366 A
- US 20070049649 A
- EP 0761729 A
- WO 2006099631 A